# EUROPEAN PATENT APPLICATION

(11) **EP 2 535 318 A2**
(43) Date of publication of application: **19.12.2012**
(21) Application number: 12171767.2
(22) Date of filing: 13.06.2012
(51) Int. Cl.: C03B 37/012, C03B 37/018

(54) **Device and method for manufacturing a preform of an optical glass fiber**

(30) Priority: 17.06.2011 NL 2006962
(71) Applicant: Draka Comteq B.V., 1083 HJ Amsterdam (NL)
(72) Inventor: Milicevic, Igor, 5707 PW Helmond (NL); Van Stralen, Mattheus Jacobus Nicolaas, 5036 ST Tilburg (NL); Hartsuiker, Johannes Antoon, 5624 KL Eindhoven (NL); Aldea, Eugen, 5611 SZ Eindhoven (NL)
(74) Representative: Algemeen Octrooi- en Merkenbureau

(57) **Abstract**

A device for contracting a hollow substrate tube made of quartz glass, whose interior is provided with one or more glass layers, which may or may not comprise one or more dopants, into an optical preform, comprising a heat source which is movable relative to the longitudinal direction of the substrate tube, wherein an insert tube is present in the interior of the hollow substrate tube, at one end thereof, which insert tube is provided with a central opening, through which opening a gas can be passed and be supplied to the interior of the substrate tube.

## Description

The present invention relates to a device and a method for contracting a hollow substrate tube made of quartz glass into an optical preform.

A device for manufacturing an optical preform is known per se from Dutch patents Nos. 1030749, 1033769, 1034059, 1036343, 1037163, 1037164, 1033763, 1034058 and 2002422 in the name of the present applicant.

US Patent No 6,490,889 relates to a method and apparatus for the manufacture of an optical fiber preform, wherein rare earth dopant material is incorporated at a comparatively high concentration and with a cross-sectional geometry of the preform designed to promote good mode scrambling. The soot coated tube is dehydrated, calcined, and sintered and collapsed, yielding a finished co-doped optical fiber preform.

US Patent No 5,131,936 relates to an apparatus comprising a further inner tube inside the supporting tube and extending along its axis. A high-purity wool of wires of the metal whose oxide is desired is placed inside the inner tube for forming a compound therewith constituting one of the reactants.

US Patent No 7,793,612 relates to the manufacture of optical fiber and the deposition and sintering of materials using a plasma torch.

US Patent No 4,952,225 relates to internally doping a tube of glass, i.e. incorporating one or more dopants in an inside layer of the tube, especially for incorporating any dopant which is difficult to put into a vapor phase but which is suitable for being put into liquid solution, at least in the form of a precursor, by placing an outlet end of a mist delivery tube in inside space of a tube blank, with an inlet end of the mist delivery tube outside the tube blank and feeding the doping mist to the mist delivery tube via the inlet end thereof to cause the delivery tube to emit the doping mist in such a manner the dopant is deposited by depositing droplets of the mist on the inside surface.

US Patent No 6,311,902 relates to a nozzle and sealing apparatus for chemical delivery systems using a gas delivery tube and to the process of introducing materials into the interior of tubular members through the nozzle, i.e. a dispersion nozzle for affixing to the delivery or distal end of the gas delivery tube, replacing the common plug and orifice arrangement.

DE 3430197 relates to a process for the internal deposition production method of a glass fibre preform, and an apparatus for carrying out same, wherein a coating gas mixture is introduced through a feed line as far as the heating zone of the burner, where it is blown out in a specific manner in the direction of the internal wall of the tube through an opening, wherein the residues of the coating gas mixture and the uncondensed reaction products are removed via a suction line.

US Patent No 4,235,616 relates to a method of forming a preform by improving the heat transfer to the particulate material formed within a substrate tube the preform itself, and resulting optical filament.

UK Patent application GB 2 093 829 relates to a method of manufacturing a glass optical fibre preform in which a coating composed essentially of one or more oxides is formed on a surface of an elongate cylindrical substrate, a tube which has a multiplicity of perforations through its wall is supported coaxially with the substrate, an annular space being provided between the said tube and the substrate, and a gaseous mixture consisting of oxygen and said vapour or vapours, and optionally an additional carrier gas, is caused to flow into the said annular space.

Using the method known from the aforesaid documents, preforms for optical fibres are formed by means of an internal chemical vapour deposition (CVD) process, in particular a plasma chemical vapour deposition (PCVD) process, wherein reactive glass-forming gases, possibly doped, are reacted inside a hollow substrate tube, resulting in the deposition of one or more glass layers on the inner surface of the hollow substrate tube. Such reactive gases are supplied on one side of the substrate tube, viz. the supply side, and as a result of the special process conditions glass layers form on the interior of the substrate tube. Via the other end of the substrate tube, also called the discharge side, components that were not deposited on the interior of the hollow substrate tube are discharged. An energy source is moved back and forth along the length of the substrate tube for forming the glass layers. The energy source, in particular a plasma generator, supplies high-frequency energy, thereby generating a plasma in the interior of the substrate tube, under which plasma conditions the reactive glass-forming gases will react (the plasma CVD technique). It is also possible, however, for the energy to be supplied in the form of heat, in particular from burners, on the outer side of the substrate tube, or via a furnace that surrounds the substrate tube. The aforesaid techniques have in common the fact that the energy source is moved back and forth with respect to the substrate tube.

During the aforesaid deposition process, in which one or more glass layers are deposited on the interior of the hollow substrate tube, such glass layers will generally have different properties. In particular, a difference between the deposition of one phase and the deposition of the other phase can be observed due to a difference in the refractive index value between the two phases. The refractive index values need not differ in all situations, however. The fact is that it has also been found to be possible to deposit a number of different glass types on the interior of the substrate tube, using a varying mixture of, for example, germanium and fluorine, which different glass layers may have exactly the same refractive index values.

After the deposition is complete, a hollow substrate tube thus obtained is contracted or consolidated so as to obtain a closed, solid massive preform. Such a contraction operation, in which a heat source is moved in longitudinal direction over the substrate tube, which is still provided with a central passage at that stage, leads to a reduction of the internal diameter of the substrate tube, and finally to a fully closed tube, also referred to as a solid preform. To obtain such a fully closed preform, a number of back and forth movements, also called strokes, are generally required. A primary preform thus obtained, which usually has an external diameter of about 2-4 cm, is generally provided with one or more additional glass layers in an additional process step. For so-called single-mode preforms the external diameter will thus eventually be about 8-12 cm, for so-called multimode preforms it will be about 3-6 cm, after which a glass fibre is obtained from such a preform by heating one end and carrying out a drawing operation.

The present inventors have found that the transport of light waves in such glass fibres can be negatively affected, a phenomenon also referred to as attenuation. Said attenuation of the light signal is essentially caused by three factors, viz. the so-called Rayleigh scattering, absorption and bending. Absorption is assumed to be caused mainly by contamination in the glass. As an example of this, water (OH-group) can be mentioned as the most dominant cause of absorption in glass fibres. The OH-group causes so-called water peaks in the optical spectrum, which peaks are around 1250 nm and 1385 nm.

As already indicated before, a so-called contraction step is carried out in the preform production process, in which step the hollow substrate tube, provided with internal doped and/or undoped glass layers, is placed in a so-called collapser unit, whereupon the hollow substrate tube is converted into a solid preform. If the glass layers in the hollow substrate tube contain any impurities, said impurities will be directly introduced into the core of the preform rod as a result of the contraction process. This will lead to an extremely high effect on the aforesaid attenuation.

The present inventors have further found that the OH-molecule can be regarded as one of the undesirable impurities, which molecule is considered to be a by-product of the reaction of glass with moisture from the environment.

The problem of moisture from the environment can be tackled in a number of ways. The contraction step can for example be carried out in a conditioned atmosphere environment, as known from European patent EP 1 670 729 in the name of the present applicant.

Another way is to use freon as an etching gas, on the assumption that part of the core is removed at the moment when OH is incorporated during the contraction process. A drawback of such a method is that during the last phase of the contraction operation, when the hollow substrate tube is definitively closed along its entire length, no freon can be supplied to the interior of the hollow substrate tube for etching away the remaining layers that were contaminated by OH during the closing operation. This means that there may yet be a negative effect of the OH groups thus incorporated during the closing operation.

The present inventors have further found that a so-called "water taper" occurs as a result of the diffusion of water into the interior of the substrate tube. The consequence of this is that the undesirable OH peak will increase from a minimum value, viz. at the location where the hollow substrate tube is first closed, to a maximum value, viz. at the position where finally the hollow substrate tube is definitively closed. The consequence of this is that the average OH peak value of optical fibres obtained from a particular preform rod will deteriorate.

The object of the present invention is thus to provide a device and a method for manufacturing an optical preform with a view to preventing or minimizing the aforesaid water taper.

Another object of the present invention is to provide a device and a method for manufacturing an optical preform, from which optical preform optical fibres exhibiting a significantly reduced attenuation, in particular at wavelengths of 1250 nm and 1385 nm, can be obtained.

Yet another object of the present invention is to provide a device and a method for manufacturing an optical preform, especially during the contraction or collapse phase in which a hollow glass substrate tube will be converted in a solid optical preform.

The present invention as described in the introduction is **characterised in that** an insert tube is present in the interior of the hollow substrate tube, at one end thereof, which insert tube is provided with a central opening, through which opening a gas can be passed, which gas can be supplied to the interior of the substrate tube.

The present inventors have thus found that placing an insert tube into one end of the hollow substrate tube at the moment when the contraction operation takes place has an advantageous effect on the extent to which OH groups are incorporated in the final preform rod. The present inventors assume that the gas to be supplied to the central opening of the insert tube prevents the ingress of water/moisture, mainly from the pipes and couplings of the equipment used for the deposition and contraction process, due to the "gas curtain" thus provided in the interior of the substrate tube. The external diameter of the insert tube is smaller than the internal diameter of the surrounding substrate tube. The annular space, viz. the space between the insert tube and the substrate tube, thus functions to form a gas front with the gas flow exiting the insert tube, which gas front prevents the ingress of moisture into the hollow substrate tube. The insert tube itself has an inlet opening and an outlet opening, wherein the gas to be supplied to the central opening, i.e. the inlet opening, will leave the insert tube at the other end thereof, i.e. the outlet opening.

It is to be noted that the present invention only relates to the contraction or collapse phase in which a hollow glass substrate tube will be converted in a solid optical preform and should not be mixed up with internal chemical deposition processes.

In a special embodiment it is desirable that the insert tube be provided with perforations along a certain length thereof, through which perforations the gas to be supplied to the insert tube can exit to the interior of the substrate tube. The use of perforations enables the gas supplied to the insert tube to exit along a certain length of the insert tube, so that the possible ingress of moisture from the environment will be minimized.

In a special embodiment, the position of the insert tube in the interior of the substrate tube may be movable. The insert tube can thus be positioned at any desired position in the interior of the substrate tube, depending on what is required.

It is furthermore preferable if the flow of the gas to be supplied to the insert tube is adjustable, in which case it is also desirable if the composition of the gas to be supplied to the insert tube is adjustable. Such adjustments can be varied during the contraction operation, if desired.

The heat source to be used in the present device can be a furnace, a burner or a plasma flame. In addition to that, it may be desirable in a special embodiment to carry out the present contraction operation in a conditioned environment, viz. an environment with relatively low air humidity. The function of the heat source is to influence the stability of the glass substrate tube in such manner that the tube will collapse resulting in a solid massive bar, i.e. optical preform.

The substrate tube mentioned in the present application can be regarded as a substrate tube made of quartz glass and having two ends, one end being regarded as a supply side and the other being regarded as a discharge side. The term "supply side" must be interpreted as being the side to which glass-forming gases, possibly doped, are supplied during the internal vapour deposition process. The discharge side can therefore be regarded as the side from which the constituents that were not deposited on the interior of the hollow substrate tube are discharged.

In the present device, in which the contraction of the hollow substrate tube made of quartz glass into a solid optical preform takes place, in particular the internal diameter of the hollow substrate tube is reduced to an eventually closed form. Said reduction of the internal diameter preferably takes place by moving the heat source back and forth along the length of the substrate tube. At some point during the aforesaid contraction process, the substrate tube is completely closed, which means that the internal diameter of the substrate tube has been reduced to zero. Preferably such a closure first takes place at one end of the substrate tube. Then the remaining "open" part extending in the longitudinal direction of the substrate tube is closed by moving the heat source. At the moment when the substrate tube is closed along the entire length thereof, it is no longer possible, therefore, to pass any gas through the substrate tube. After all, the substrate tube has been converted into a solid massive preform.

Accordingly, the present invention in particular relates to the placement of an insert tube during the contraction operation into the substrate tube, which is still "open" at that stage, whilst a gas is supplied to the interior of the substrate tube via the insert tube.

The present invention in particular relates to a particular phase of the contraction process, particularly the moment when one end of the substrate tube is already closed. In such an embodiment it is desirable for the insert tube to be disposed at the other end, which is not closed yet, so that a gas can be supplied to the interior of the substrate tube via the central opening of the insert tube, which gas will circulate in the substrate tube on account of the fact that the "other" end is closed, and can only exit the substrate tube via the end that is still "open". The contraction operation will subsequently be continued, with the heat source being moved along the length of the substrate tube, in particular in the direction of the still "open" end, during which operation the interior of the substrate tube is flushed with the gas that is being supplied to the interior of the substrate tube via the insert tube. In other words, the process of solidification of the substrate tube will take place in the direction away from the end that was closed first, and the contraction process will be ended once the substrate tube is closed over substantially the entire length thereof, viz. the interior diameter is reduced to zero.

The present inventors have in particular found that supplying the gas during the aforesaid operation, viz the closing process, is important. To prevent the insert tube from being enclosed in the substrate tube during the final phase of the contraction process, it is desirable to remove the insert tube therefrom.

In a special embodiment the insert tube is disposed near the discharge side of the substrate tube; such a position is in particular desirable if the supply side of the substrate tube is closed first during the contraction operation. According to another embodiment of the present invention the step of completely closing the substrate tube starts at the discharge side of the substrate tube. The benefit of this step resides in the presence of glass layers of higher purity, less contamination and less moisture at the supply side.

The present invention further relates to a method for contracting a hollow substrate tube made of quartz glass, whose interior is provided with one or more glass layers, which may or may not comprise one or more dopants, into an optical preform, wherein a heat source is moved along the length of the substrate tube during the contraction process, which method is **characterised in that** an insert tube provided with a central opening is placed in an end of the substrate tube, via which opening a gas is supplied to the interior of the substrate tube during the contraction process.

In a special embodiment of the present method, one end of the substrate tube is preferably contracted into a closed end through heating by means of the heat source, wherein the aforesaid tube is fully closed by moving the heat source along the length of the tube, wherein an insert tube is placed into the end that is not closed yet, wherein a gas is supplied to the interior of the substrate tube via the insert tube during the further execution of the contraction operation.

The present invention thus relates to an embodiment in which one end of the preform is contracted into a closed end through heating by means of the heat source, after which an insert tube provided with a central opening is placed into the other end of the substrate tube, which is not closed yet, wherein a gas is supplied to the interior of the substrate tube via the aforesaid opening of said insert tube.

In a special embodiment, the gas being supplied is preferably a so-called dry gas, which is preferably composed from members selected from the group consisting of O₂, SF₆ and C₂F₆ or a mixture thereof. Such gases are in particular suitable for minimising undesirable ingress of water/moisture from the environment.

The present method is furthermore preferably carried out in such a manner that the supply side end of the substrate tube, where glass-forming precursors were supplied to the interior of the hollow substrate tube in a previously executed internal vapour deposition process so as to obtain one or more deposited glass layers, is the first end that is contracted into a closed end. In such an embodiment the insert tube will be placed near the discharge side of the substrate tube.

The gas flow to be supplied to the insert tube must be selected so that diffusion of water into the tube is prevented, wherein preferably the flow of the gas to be supplied to the insert tube amounts to at least 500 scm, preferably at least 1000 scm.

To obtain a fully closed, solid preform it is preferable not to remove the insert tube from the interior of the substrate tube until the last phase of the contraction operation, after which removal the substrate tube is converted into the solid preform. Thus, any ingress of moisture during the complete closure of the substrate tube is prevented. With a view to fully closing the hollow substrate tube it is desirable that the heat source be movable along the length of the substrate tube during the contraction process. The contraction operation can be regarded in particular as a process wherein the internal diameter of the substrate tube is decreased, finally even reduced to zero, closed in this case, by moving the heat source back and forth along the length of the substrate tube. After the present collapse process the preform thus obtained can be provided with one or more additional glass layers. Such additional glass layers will increase the external outer diameter of the optical preform.

To prevent undesirable temperature differences in the interior of the hollow substrate tube, it is desirable in certain embodiments to pre-heat the gas that is to be supplied to the insert tube. A step of collapsing a quartz glass substrate tube takes place at a temperature at which the glass tube becomes more or less viscous. Undesirable temperature differences between the hollow substrate tube and the gas supplied to the insert tube may result in small cracks in the glass layers present in the interior of the hollow substrate tube.

The present invention further relates to a method for manufacturing an optical fibre, wherein a preform is heated at one end thereof, and subsequently an optical fibre is drawn from the end thus formed, wherein it is in particular preferable to use a preform as obtained by carrying out the above-described method, in particular the contraction step thereof.

The present invention will now be explained with reference to figures, in which regard it should be noted, however, that the present figures must not be construed as being limitative to the scope of the present invention.
Figure 1 schematically shows the situation within the hollow substrate tube if an insert tube is present in the interior of thereof.
Figure 2 schematically shows a set-up according to the present invention, in which the insert tube is located near the discharge side of the substrate tube.

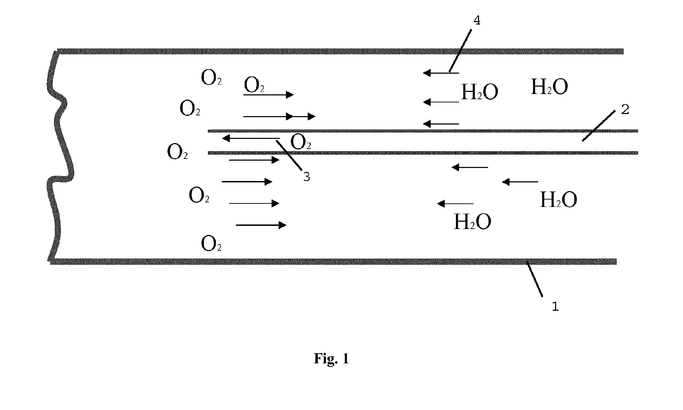

Figure 1 is a schematic view of a hollow substrate tube 1 (provided with glass layers (not shown) on the interior of thereof) with an insert tube 2 present therein. The hollow substrate tube 1 made of quartz glass can comprise one or more dopants. Quartz glass can be mentioned as a suitable material for the insert tube 2. In figure 1, the insert tube 2 is represented as a hollow tube, also called capillary; gas to be supplied to the interior of the insert tube can exit via an outlet opening at one end thereof. Oxygen is supplied to the interior of the insert tube 2, i.e. the inlet opening, as a flushing gas, the direction of flow in the insert tube 2 of which gas is indicated by the arrow 3. The oxygen will exit at the open end of the insert tube 2, i.e. outlet opening, and flow back in the reverse direction. The reason for said reflow is that the supply side (not shown) of the substrate tube 1 has already been subjected to a contraction operation, so that the supply side is already closed. Oxygen will thus exit the substrate tube 1 in the reverse direction, viz in the direction of the discharge side of the substrate tube 1, via the annular space, thus forming a front or "curtain" of oxygen, as a result of which the ingress of water from the environment, indicated at 4, will be minimised.

In a special embodiment the insert tube 2 may be provided with perforations (not shown) along the length thereof, so that the gas to be supplied to the insert tube 2 can exit not only at the open end thereof but also at a specific position of the insert tube 2. Although oxygen is used as the gas to be supplied in figure 1, it is apparent that besides oxygen one or more other gases can be admixed, which gases prevent the harmful H₂O from entering further into the substrate tube, in which regard in particular a mixture of, for example, two or more of oxygen, SF₆ and C₂F₆ is to be considered.

The situation shown in figure 1 occurs in particular when the deposition operation has been terminated and the hollow substrate tube 1 thus provided with glass layers must be converted into a closed preform by means of a contraction operation, in which a heat source (not shown) is moved along the length of the substrate tube 1. The placement of the insert tube 2 into the interior of the substrate tube 1 preferably takes place at the moment when the contraction operation, in which a heat source is moved along the length of the substrate tube 1, is started. During the last phase of the aforesaid contraction operation, when only a small length of the substrate tube 1 is to be closed yet, the insert tube 2 is removed from the interior of the substrate tube 1, so that an optimum use is made of the "gas front" in the annular space. The solid preform thus obtained can be externally provided with one or more additional glass layers, if desired, in order to obtain the intended external diameter.

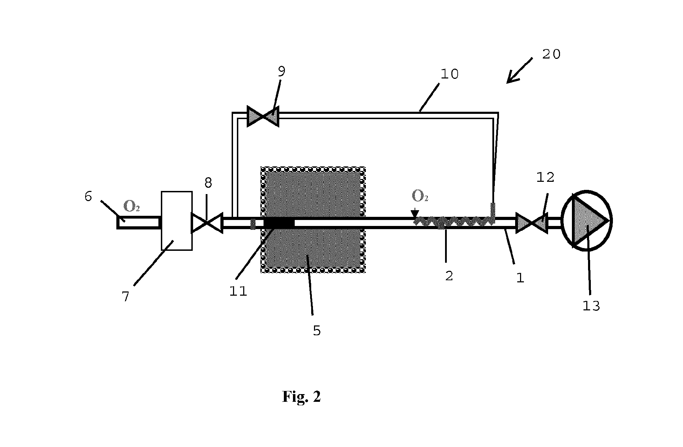

Figure 2 schematically shows the device according to the present invention, with an insert tube 2 present in the interior of the substrate tube 1 near the discharge side thereof. In figure 2 there is schematically shown a furnace 5, which furnace 5 is heated to a temperature so high that the substrate tube 1 is subjected to a contraction operation, the supply side end of which substrate tube 1 is already closed, as schematically shown in figure 2. After the substrate tube 1 has been closed on one side, oxygen is supplied to the insert tube 2, which oxygen is for example supplied via the supply line 6, the mass flow controller 7, the valve 8 and subsequently, via the bypass line 10, to the insert tube 2. A valve 9 is disposed in the bypass line. Preferably, the valve 12 is closed during the actual supply of oxygen to the insert tube 2. Thus, oxygen is supplied to the interior of the substrate tube 1 via the insert tube 2, whilst the furnace 5 is preferably moved in the direction of the discharge side, so that the substrate tube 1 is subjected to a full contraction operation as a result of the high temperature, whilst the intended gas is supplied to the insert tube 2 and discharged via the pump 13 during the movement of the furnace 5.

Although the heat source is a furnace 5 in figure 2, it is possible in a specific embodiment to use other heat sources, for example a gas burner. In addition to that it must be said that the device shown in figure 1 is not limited to the valves, pipes and controllers shown therein, but that the invention is limited only by the wording of the claims.

Furthermore, the present invention is not limited to the placement of the inserted tube 2 at the discharge side, but for process reasons it is preferable to start the contraction operation at the supply side, so that the complete closure of the substrate tube 1 will take place near the supply side. Although the insert tube is shown herein as a tube having a constant diameter along its length, it is possible in a specific embodiment to vary said diameter along the length thereof, in which case the external diameter of the insert tube 2 must be smaller than the internal diameter of the substrate tube 1, however, so as to be able to thus create an annular space for forming the "gas curtain" that is to prevent undesirable ingress of moisture in the interior of the hollow substrate tube 1 during its contraction process.

## Claims

1. A device for contracting a hollow substrate tube made of quartz glass, whose interior is provided with one or more glass layers, which may or may not comprise one or more dopants, into an optical preform, comprising a heat source which is movable relative to the longitudinal direction of the substrate tube, **characterised in that** an insert tube is present in the interior of the hollow substrate tube, at one end thereof, which insert tube is provided with a central opening, through which opening a gas can be passed and be supplied to the interior of the substrate tube.

2. A device according to claim 1, **characterised in that** the insert tube is provided with perforations along a certain length thereof, through which perforations the gas to be supplied to the insert tube can exit to the interior of the substrate tube.

3. A device according to one or both of the preceding claims, **characterised in that** the position of the insert tube in the interior of the substrate tube is movable.

4. A device according to any one or more of the preceding claims, **characterised in that** the flow and/or the composition of the gas to be supplied to the insert tube is adjustable.

5. A device according to any one or more of the preceding claims, **characterised in that** the substrate tube comprises a supply side and a discharge side, with the insert tube being disposed at the discharge side of the substrate tube.

6. A device according to any one or more of the preceding claims, **characterised in that** the heat source is a furnace, a burner or a plasma flame.

7. A device according to any one or more of the preceding claims, **characterised in that** the external diameter of the insert tube is smaller than the internal diameter of the substrate tu be.

8. A method for contracting a hollow substrate tube made of quartz glass, whose interior is provided with one or more glass layers, which may or may not comprise one or more dopants, into an optical preform, whilst a heat source is moved along the length of the substrate tube during the contraction process, **characterised in that** an insert tube provided with a central opening is placed into one end of the substrate tube, via which opening a gas is supplied to the interior of the substrate tube during the contraction process.

9. A method according to claim 8, **characterised in that** one end of the substrate tube is contracted into a closed end through heating by means of the heat source, wherein an insert tube is placed into the other end, which is not closed yet, wherein a gas is supplied to the interior of the substrate tube via the insert tube during the further execution of the contraction operation.

10. A method according to one or both of claims 8 - 9, **characterised in that** the gas being supplied is composed from members selected from the group consisting of O₂, SF₆ and C₂F₆ or a mixture thereof.

11. A method according to one or more of claims 8 - 10, **characterised in that** the substrate tube has a supply side and a discharge side, wherein the end disposed at the supply side of the substrate tube is the first end that is contracted into a closed end.

12. A method according to one or more of claims 8 - 11, **characterised in that** the flow of the gas to be supplied to the insert tube amounts to at least 500 scm, preferably at least 1000 scm.

13. A method according to one or more of claims 8 - 12, **characterised in that** the insert tube is removed from the interior of the substrate tube during the closure of the substrate tu be.

14. A method according to one or more of claims 8 - 13, **characterised in that** the gas to be supplied to the insert tube is pre-heated.

15. A method for manufacturing an optical fibre by heating a preform at one end thereof and subsequently drawing an optical fibre therefrom, **characterised in that** a preform as obtained after carrying out the method according to one or more of the preceding claims is used.
